(19) Europäisches Patentamt
European Patent Office
Office européen des brevets

(11) Veröffentlichungsnummer: **0 105 527**
**A1**

(12) # EUROPÄISCHE PATENTANMELDUNG

(21) Anmeldenummer: 83109975.9

(22) Anmeldetag: 05.10.83

(51) Int. Cl.³: C 07 C 131/00
A 01 N 37/48, A 01 N 37/18
A 01 N 37/40

(30) Priorität: 06.10.82 CH 5878/82
08.07.83 CH 3768/83

(43) Veröffentlichungstag der Anmeldung:
18.04.84 Patentblatt 84/16

(84) Benannte Vertragsstaaten:
AT BE CH DE FR GB IT LI LU NL

(71) Anmelder: F. HOFFMANN-LA ROCHE & CO.
Aktiengesellschaft

CH-4002 Basel(CH)

(72) Erfinder: Frater, Georg, Dr.
Am Pfisterhölzli 22
CH-8606 Greifensee(CH)

(72) Erfinder: Suchy, Milos, Dr.
Grossplatzstrasse 3
CH-8122 Pfaffhausen(CH)

(72) Erfinder: Wenger, Jean, Dr.
Brunnenwiesenstrasse 1
CH-8610 Uster(CH)

(72) Erfinder: Winternitz, Paul, Dr.
Am Pfisterhölzli 50
CH-8606 Greifensee(CH)

(74) Vertreter: Lederer, Franz, Dr. et al,
Patentanwälte Dr. Lederer Franz Meyer-Roxlau Reiner F.
Lucile-Grahn-Strasse 22
D-8000 München 80(DE)

(54) **Benzoesäurederivate und deren Verwendung als Unkrautbekämpfungsmittel.**

(57) Die Erfindung betrifft neue Verbindungen der Formel

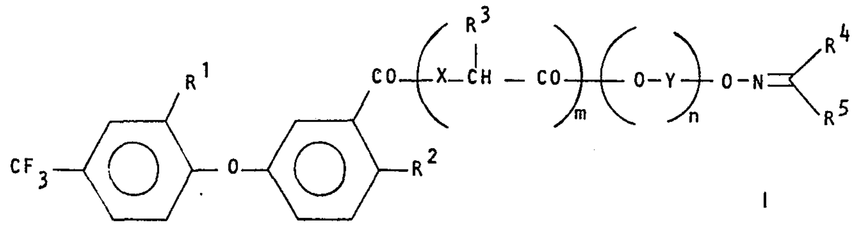

I

worin $R^1$, $R^2$, $R^3$, $R^4$, $R^5$, m, n, X und Y die in der Beschreibung angegebenen Bedeutungen besitzen, Verfahren zu deren Herstellung, Unkrautbekämpfungsmittel, die diese Verbindungen als Wirkstoffe enthalten, sowie die Verwendung solcher Verbindungen bzw. Mittel zur Bekämpfung von Unkräutern.

EP 0 105 527 A1

0105527

F.Hoffmann-La Roche & Co. Aktiengesellschaft,Basel,Schweiz

5. Okt. 1983

RAN 6102/32

# Benzoesäurederivate und deren Verwendung als Unkrautbekämpfungsmittel

Die Erfindung betrifft Benzoesäurederivate der allgemeinen Formel

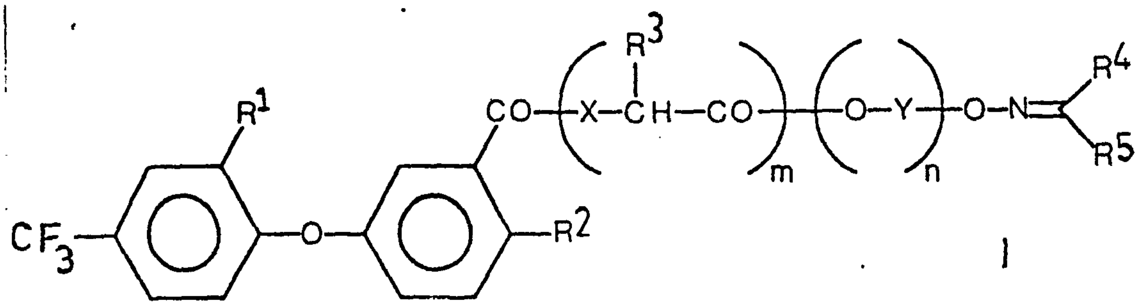

I

worin $R^1$ Wasserstoff oder Halogen,
$R^2$ Halogen, Nitro oder Cyano,
$R^3$ Wasserstoff oder Methyl,
$R^4$ $C_{1-6}$-Alkyl,
und $R^5$ $C_{1-6}$-Alkyl oder $C_{1-6}$-Alkoxy,
oder $R^4$ und $R^5$ zusammen mit dem Kohlenstoffatom, an das sie geknüpft sind, einen $C_{5-7}$-Cycloalkylring bilden,
m und n beide 1, oder das eine 0 und das andere 1,
X Sauerstoff oder $-NR^6-$,
Y nieder Alkylen mit mindestens 2 Kohlenstoffatomen
und $R^6$ Wasserstoff oder $C_{1-6}$-Alkyl bedeuten.

Pa/17.6.83

Die Verbindungen der Formel I besitzen herbizide Eigenschaften und eignen sich somit als Unkrautbekämpfungsmittel oder als Wirkstoffe von Unkrautbekämpfungsmitteln. Somit umfasst die Erfindung auch Unkrautbekämpfungsmittel, die mindestens eine Verbindung der Formel I als Wirkstoff enthalten, Verfahren zur Herstellung dieser Verbindungen sowie die Verwendung solcher Verbindungen bzw. Mittel zur Bekämpfung von Unkräutern.

In der obigen Formel I umfasst der Ausdruck "Halogen" Fluor, Chlor, Brom oder Jod, wobei Chlor bevorzugt ist. Unter "$C_{1-6}$-Alkyl" sind sowohl geradkettige als auch verzweigte Alkylgruppen zu verstehen, wie Methyl, Aethyl, n-Propyl, Isopropyl, n-Butyl, Neopentyl und n-Hexyl. Dies gilt auch für die $C_{1-6}$-Alkylgruppe enthaltende $C_{1-6}$-Alkoxygruppe. Die durch Y dargestellte niedere Alkylengruppe kann sowohl geradkettig als auch verzweigt sein und enthält insbesondere 2 oder 3 Kohlenstoffatome.

Falls im Molekül asymmetrische Kohlenstoffatome vorhanden sind, treten die Verbindungen der Formel I in optisch aktiver Form auf. Durch das Vorliegen der Stickstoff-Kohlenstoff-Doppelbindung tritt für jene Verbindungen der Formel I, worin $R^4$ und $R^5$ unterschiedliche Bedeutung haben, zusätzlich geometrische Isomerie auf. Unabhängig davon kommt auch in gewissen Fällen eine Atropisomerie vor. Die Formel I soll demnach die Racemate sowie all diese möglichen isomeren Formen umfassen.

Unabhängig voneinander bedeuten $R^1$ vorzugsweise Halogen, insbesondere Chlor; $R^2$ vorzugsweise Halogen oder Nitro, insbesondere Nitro; $R^3$ vorzugsweise Methyl; $R^4$ vorzugsweise $C_{1-3}$-Alkyl, insbesondere Methyl; $R^5$ vorzugsweise $C_{1-6}$-Alkyl oder $C_{1-6}$-Alkoxy, insbesondere $C_{1-3}$-Alkyl oder $C_{1-3}$-Alkoxy; X vorzugsweise Sauerstoff; und Y vorzugsweise Aethylen.

Bevorzugt stellt eines von m und n 1 und das andere 0 dar.

Falls X die Gruppierung $-NR^6-$ bedeutet, ist $R^6$ vorzugsweise Wasserstoff.

Bevorzugte Verbindungen der Formel I sind:

5-(o-Chlor-p-trifluormethyl-phenoxy)-2-nitro-benzoesäure-(1-isopropylidenaminooxycarbonyl-äthyl)ester,
5-(o-Chlor-p-trifluormethyl-phenoxy)-2-nitro-benzoesäure-[1-(1,2-dimethylpropylidenaminooxycarbonyl)-äthyl]-ester,
5-(o-Chlor-p-trifluormethyl-phenoxy)-2-nitro-benzoesäure-(2-isopropylidenaminooxy-äthyl)ester und
5-(o-Chlor-p-trifluormethyl-phenoxy)-2-nitro-benzoesäure-[2-(1-methylpropylidenaminooxy)-äthyl]ester.

Das erfindungsgemässe Verfahren zur Herstellung der Verbindungen der Formel I ist dadurch gekennzeichnet, dass man

a) eine Säure der allgemeinen Formel

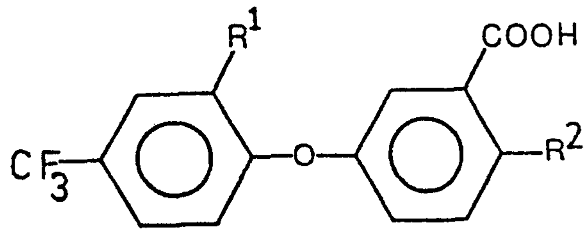 II

worin $R^1$ und $R^2$ die oben angegebenen Bedeutungen besitzen,

oder ein Salz bzw. ein reaktionsfähiges Derivat davon, mit einer Verbindung der allgemeinen Formel

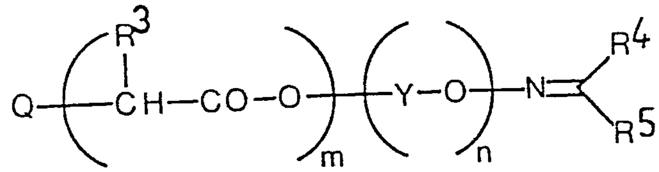

III

worin $R^3$, $R^4$, $R^5$, m, n und Y die oben angegebenen Bedeutungen besitzen

und Q eine Abgangsgruppe, beispielsweise Chlor, Brom, Jod, Mesyloxy oder Tosyloxy, bzw. Hydroxy bedeutet,

umsetzt,

b) ein Säurehalogenid der allgemeinen Formel

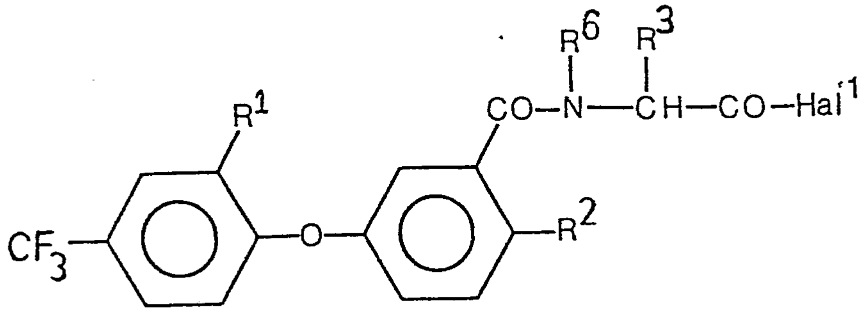

IV

worin $R^1$, $R^2$, $R^3$ und $R^6$ die oben angegebenen Bedeutungen besitzen

und $Hal^1$ Halogen, insbesondere Chlor, bedeutet,

mit einem Alkohol bzw. Oxim der allgemeinen Formel

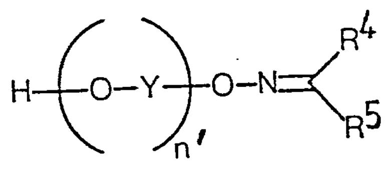

V

worin $R^4$, $R^5$ und Y die oben angegebenen Bedeutungen besitzen

und n' 0 oder 1 bedeutet,

umsetzt,

c) ein Benzamid der allgemeinen Formel

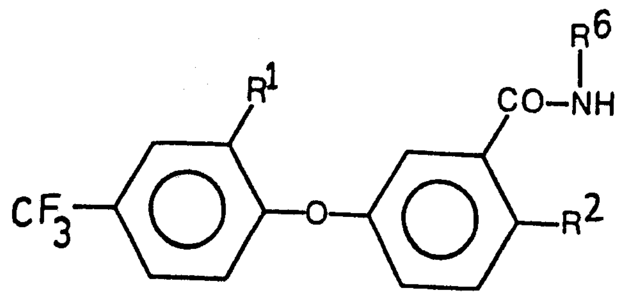

VI

worin $R^1$, $R^2$ und $R^6$ die oben angegebenen Bedeutungen besitzen,

mit einer Verbindung der allgemeinen Formel

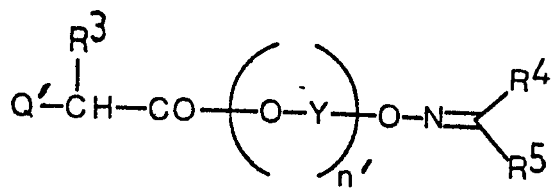

VII

worin $R^3$, $R^4$, $R^5$, Y und n' die oben angegebenen Bedeutungen besitzen,

und Q' eine Abgangsgruppe bedeutet,

umsetzt,

d) ein Phenol der allgemeinen Formel

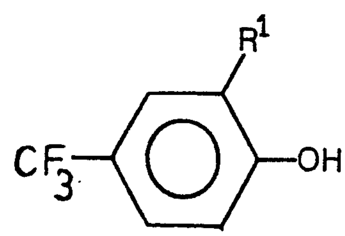

VIII

worin $R^1$ die oben angegebene Bedeutung besitzt,

oder ein Alkalimetallsalz davon, mit einem Halogenid der allgemeinen Formel

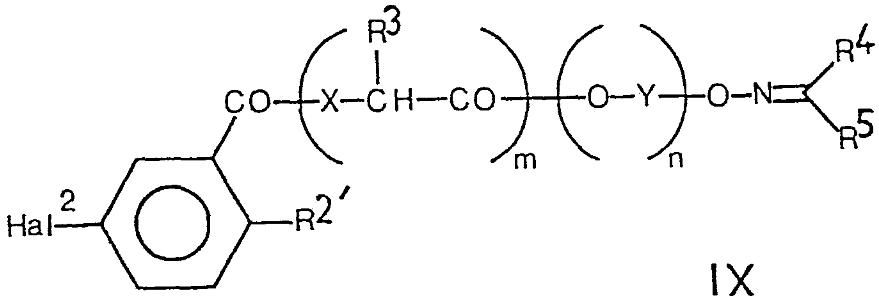

IX

worin $R^3$, $R^4$, $R^5$, m, n, X und Y die oben angegebenen Bedeutungen besitzen,
$R^{2'}$ Nitro oder Cyano bedeutet
und $Hal^2$ Halogen, vorzugsweise Fluor, bedeutet,
umsetzt, oder

e) eine Verbindung der allgemeinen Formel

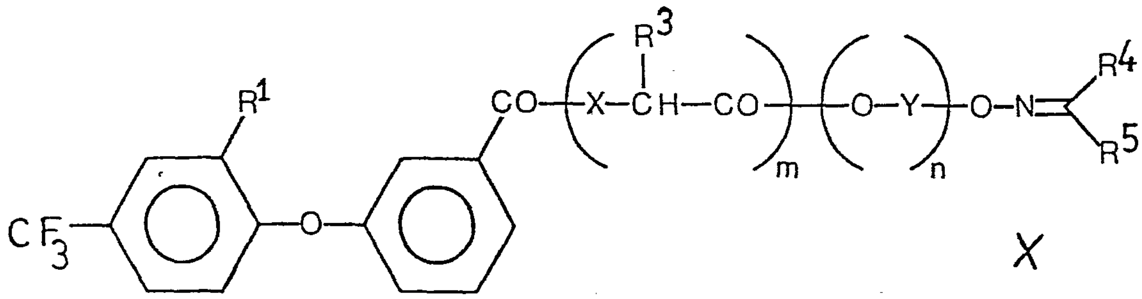

X

worin $R^1$, $R^3$, $R^4$, $R^5$, m, n, X und Y die oben angegebenen Bedeutungen besitzen,
nitriert.

Die Verfahrensvariante a) - eine Veresterung, die nach an sich bekannten Methoden durchgeführt werden kann - führt zu jenen Verbindungen der Formel I, worin das allfällig vorhandene Symbol X Sauerstoff bedeutet. So wird beispielsweise eine Säure der Formel II, insbesondere aber ein Salz davon, mit einer Verbindung der Formel III, in der Q für eine Abgangsgruppe, insbesondere für Chlor, Brom, Jod, Mesyloxy oder Tosyloxy, steht, zweckmässigerweise in einem inerten Verdünnungsmittel und bei Temperaturen von etwa -20°C bis 150°C, vorzugsweise im Temperaturbereich von 0°C bis 100°C, umgesetzt. Es kommen als Salze der Säure der Formel II insbesondere Alkalimetallsalze, z.B. das Natrium-, Kalium-oder Lithiumsalz, Erdalkalimetallsalze, z.B. das Magnesium-, Calcium- oder Bariumsalz, Salze mit organischen Basen, z.B. ein Mono-, Di- oder Trialkylammoniumsalz oder

ein Pyridiniumsalz, oder das Ammoniumsalz, in Frage, wobei die Alkalimetallsalze bevorzugt sind. Die verwendbaren Verdünnungsmittel sind vorzugsweise inerte organische Lösungsmittel, wie aliphatische und cyclische Aether, z.B. Diäthyläther, Tetrahydrofuran und Dioxan, Aromaten, z.B. Benzol und Toluol, Dimethylformamid, Dimethylsulfoxid und Hexamethylphosphorsäuretriamid.

Bei Verwendung der freien Säure der Formel II wird die Umsetzung zweckmässigerweise in Gegenwart einer Base bzw. eines Säureacceptors durchgeführt. Man kann dazu alle üblicherweise verwendbaren anorganischen und organischen säurebindenden Mittel benützen, zu denen vorzugsweise Alkalimetall- und Erdalkalimetallcarbonate und -bicarbonate, tertiäre Amine, z.B. Triäthylamin, Dimethylanilin und Pyridin, und 1,8-Diaza-bicyclo[5,4,0]undec-7-en gehören.

Im Falle der Verwendung eines reaktionsfähigen Derivats der Säure der Formel II steht Q in der Formel III für Hydroxy. Das reaktionsfähige Derivat der Säure der Formel II ist vorzugsweise ein Halogenid, insbesondere das Chlorid, kann aber auch z.B. das Imidazolid oder das Anhydrid sein. Die Umsetzung wird zweckmässigerweise in einem inerten Lösungsmittel, wie einem aliphatischen oder cyclischen Aether, z.B. Diäthyläther, Tetrahydrofuran oder Dioxan, einem aliphatischen oder aromatischen Kohlenwasserstoff, z.B. n-Hexan, Benzol oder Toluol, oder einem halogenierten, insbesondere chlorierten, Kohlenwasserstoff, z.B. Methylenchlorid oder Chloroform, und bei Temperaturen von etwa -20°C bis 150°C, vorzugsweise von 0°C bis 50°C, durchgeführt.

Bei Verwendung eines Säurehalogenides der Säure der Formel II wird die Umsetzung zweckmässigerweise in Gegenwart eines säurebindenden Mittels durchgeführt. Als geeignet erweisen sich anorganische Basen, z.B. Alkalimetall- und Erdalkalimetallcarbonate und -bicarbonate, sowie organische Basen, z.B. tertiäre Amine, insbesondere

Triäthylamin oder Pyridin. Das Säurehalogenid ist vorzugsweise das Säurechlorid.

Die Verfahrensvariante b) führt zu jenen Verbindungen der Formel I, worin m 1 und X $-NR^6-$ bedeuten, und wird zweckmässigerweise unter jenen Bedingungen durchgeführt, die oben im Zusammemhang mit der Umsetzung eines reaktionsfähigen Derivats der Säure der Formel II mit einer Verbindung der Formel III, worin Q Hydroxy bedeutet, angegeben sind.

Auch die Verfahrensvariante c) führt zu denjenigen Verbindungen der Formel I, worin m 1 und X $-NR^6-$ bedeuten. In der Formel VII steht Q' insbesondere für Chlor, Brom, Jod, Mesyloxy oder Tosyloxy, wobei Brom bevorzugt ist.

Die Umsetzung gemäss Verfahrensvariante c) erfolgt zweckmässigerweise in Gegenwart eines inerten Verdünnungsmittels, insbesondere eines organischen Lösungsmittels, sowie in Gegenwart eines säurebindenden Mittels. Als bevorzugte organische Lösungsmittel kommen insbesondere aliphatische oder cyclische Aether, z.B. Diäthyläther, Tetrahydrofuran und Dioxan, Aromaten, z.B. Benzol und Toluol, und Dimethylformamid in Frage, wobei Toluol und Dimethylformamid besonders bevorzugte Lösungsmittel darstellen. Zu den bevorzugten säurebindenden Mitteln gehören niedere tertiäre Alkylamine, z.B. Triäthylamin, sowie 1,5-Diaza-bicyclo[4,3,0]non-5-en, 1,8-Diaza-bicyclo[4,5,0]-undec-7-en und 1,4-Diaza-bicyclo[2,2,2]octan. Anstelle eines solchen säurebindenden Mittels kann Natriumhydrid als Base verwendet werden.

Die Reaktionstemperaturen liegen bei der Durchführung dieser Verfahrensvariante im allgemeinen zwischen -20°C und 120°C, vorzugsweise zwischen 20°C und 80°C.

Die Verfahrensvariante d), die zu jenen Verbindungen der Formel I führt, worin $R^2$ Nitro oder Cyano bedeutet,

kann zweckmässigerweise durchgeführt werden, indem man das Phenol der Formel VIII in ein Alkalimetallsalz, beispielsweise unter Verwendung von Natriumhydrid oder Kaliumhydroxid mit azeotroper Wasserentfernung, überführt und anschliessend das Salz mit dem Halogenid der Formel IX reagieren lässt. Die letztgenannte Reaktionsstufe wird zweckmässigerweise in einem dipolaren aprotischen Lösungsmittel, z.B. Dimethylformamid oder Dimethylsulfoxid, oder in Pyridin, bei Temperaturen zwischen 50°C und 150°C, vorzugsweise zwischen 70°C und 110°C, vorgenommen. Im Falle der Verwendung dieser Verfahrensvariante wird sie vorzugsweise zur Herstellung jener Nitro- bzw. Cyanogruppen enthaltenden Verbindungen der Formel I verwendet, worin m und n beide 1 oder m 0 und n 1 bedeuten.

Die Verfahrensvariante e) führt zu denjenigen Verbindungen der Formel I, worin $R^2$ Nitro bedeutet. Die Nitrierung erfolgt zweckmässigerweise mittels Salpetersäure bzw. Salpetersäure enthaltender Gemische oder Lösungen. Beispiele solcher Gemische bzw. Lösungen sind Gemische von Salpetersäure und Schwefelsäure, Lösungen von Salpetersäure in Eisessig und Lösungen von konzentrierter Salpetersäure in chlorierten Kohlenwasserstoffen, z.B. Methylenchlorid. Zudem wird zweckmässigerweise bei Temperaturen zwischen 0°C und der Raumtemperatur gearbeitet. Auch im Falle der Verwendung dieser Verfahrensvariante wird sie vorzugsweise zur Herstellung von Verbindungen der Formel I, worin m und n beide 1 oder m 0 und n 1 bedeuten, verwendet.

Die Isolierung und Reinigung der so hergestellten Verbindungen der Formel I können nach an sich bekannten Methoden erfolgen.

Für den Fall, dass asymmetrische Kohlenstoffatome im Molekül der Formel I vorhanden sind und keine gezielte Synthese zur Isolierung reiner optischer Isomerer durchgeführt wird, fällt das Produkt normalerweise als Racemat an. Die Isomeren können nach an sich bekannten Methoden

aufgetrennt werden. Gewünschtenfalls können allerdings die optischen Isomeren durch Synthese aus entsprechenden optisch aktiven Ausgangsmaterialien hergestellt werden.

Die Ausgangsmaterialien der Formeln II bis X bzw. die Salze und die reaktionsfähigen Derivate der Säuren der Formel II und die Alkalimetallsalze der Phenole der Formel VIII sind entweder bekannt oder können nach an sich bekannten Methoden hergestellt werden.

Die Verbindungen der Formel I besitzen herbizide Eigenschaften und eignen sich zur Bekämpfung von Unkräutern, insbesondere von Galium aparine, Amaranthus retroflexus, Ipomea spp., Abutilon theophrasti, Sesbania exaltata, Chenopodium album, Xanthium pensylvanicum, Daucus carota, Fagopyrum esculentum, Sinapsis arvensis und Datura stramonium in Getreide, insbesondere in Gersten-, Hafer-, Weizen-, Mais-, Reis- und Soyakulturen. Besonders bevorzugt eignen sich die erfindungsgemässen Verbindungen zur Bekämpfung von Unkräutern in Weizen-, Mais-, Reis- und Soyakulturen.

Im allgemeinen genügt eine Konzentration von 0,05 bis 2 kg Wirkstoff der Formel I/ha, vorzugsweise 0,2 bis 1 kg Wirkstoff der Formel I/ha, um den gewünschten herbiziden Effekt zu erzielen.

Die Verbindungen der Formel I sind sowohl Vorauflauf-Herbizide als auch Nachauflauf-Herbizide, wobei ihre Anwendung als Nachauflauf-Herbizide bevorzugt ist.

Das erfindungsgemässe Unkrautbekämpfungsmittel ist dadurch gekennzeichnet, dass es eine wirksame Menge mindestens einer Verbindung der Formel I, wie oben definiert, sowie Formulierungshilfsstoffe enthält. Das Mittel enthält zweckmässigerweise zumindest einen der folgenden Formulierungshilfsstoffe: feste Trägerstoffe; Lösungs- bzw. Dispersionsmittel; Tenside (Netz- und Emulgiermittel); Dispergatoren (ohne Tensidwirkung); und Stabilisatoren. Unter Verwendung solcher und anderer Hilfsstoffe können die Verbindungen der Formel I, also die herbiziden Wirkstoffe, in die üblichen Formulierungen übergeführt werden, wie Stäube, Pulver, Granulate, Lösungen, Emulsionen, Suspensionen, emulgierbare Konzentrate, Pasten und dergleichen.

Die Verbindungen der Formel I sind im allgemeinen wasserunlöslich und können nach den für wasserunlösliche Verbindungen üblichen Methoden unter Verwendung der diesbezüglichen Formulierungshilfsstoffe konfektioniert werden. Die Herstellung der Mittel kann in an sich bekannter Weise durchgeführt werden, z.B. durch Vermischen des jeweiligen Wirkstoffes mit festen Trägerstoffen, durch Auflösen oder Suspendieren in geeigneten Lösungs- bzw. Dispersionsmitteln, eventuell unter Verwendung von Tensiden als Netz- oder Emulgiermitteln und/oder von Dispergatoren, durch Verdünnen bereits vorbereiteter emulgierbarer Konzentrate mit Lösungs- bzw. Dispersionsmitteln usw.

Als feste Trägerstoffe kommen im wesentlichen in Frage: natürliche Mineralstoffe, wie Kreide, Dolomit, Kalkstein, Tonerden und Kieselsäure und deren Salze (beispielsweise Kieselgur, Kaolin, Bentonit, Talkum, Attapulgit und Montmorillonit); synthetische Mineralstoffe, wie hochdisperse Kieselsäure, Aluminiumoxid und Silikate; organische Stoffe, wie Cellulose, Stärke, Harnstoff und Kunstharze; und Düngemittel, wie Phosphate und Nitrate, wobei solche Trägerstoffe z.B. als Pulver oder als Granulate vorliegen können.

Als Lösungs- bzw. Dispersionsmittel kommen im wesentlichen in Frage: Aromaten, wie Benzol, Toluol, Xylole und Alkylnaphthaline; chlorierte Aromaten und chlorierte aliphatische Kohlenwasserstoffe, wie Chlorbenzole, Chloräthylene und Methylenchlorid; aliphatische Kohlenwasserstoffe, wie Cyclohexan und Paraffine, z.B. Erdölfraktionen; Alkohole, wie Butanol und Glykol, sowie deren Aether

und Ester; Ketone, wie Aceton, Methyläthylketon, Methylisobutylketon und Cyclohexanon; und stark polare Lösungs- bzw. Dispersionsmittel, wie Dimethylformamid, N-Methylpyrrolidon und Dimethylsulfoxid, wobei solche Lösungsmittel vorzugsweise Flammpunkte von mindestens 30°C und Siedepunkte von mindestens 50°C aufweisen, und Wasser. Unter den Lösungs- bzw. Dispersionsmitteln kommen auch in Frage sogenannte verflüssigte gasförmige Streckmittel oder Trägerstoffe, die solche Produkte sind, welche bei Raumtemperatur und unter Normaldruck gasförmig sind. Beispiele solcher Produkte sind insbesondere Aerosol-Treibgase, wie Halogenkohlenwasserstoffe, z.B. Dichlordifluormethan. Liegt das erfindungsgemässe Unkrautbekämpfungsmittel in Form einer Druckgaspackung vor, so wird zweckmässigerweise zusätzlich zum Treibgas ein Lösungsmittel verwendet.

Die Tenside (Netz- und Emulgiermittel) können nichtionische Verbindungen sein, wie Kondensationsprodukte von Fettsäuren, Fettalkoholen oder fettsubstituierten Phenolen mit Aethylenoxid; Fettsäureester und -äther von Zuckern oder mehrwertigen Alkoholen; die Produkte, die aus Zuckern oder mehrwertigen Alkoholen durch Kondensation mit Aethylenoxid erhalten werden; Blockpolymere von Aethylenoxid und Propylenoxid; oder Alkyldimethylaminoxide.

Die Tenside können auch anionische Verbindungen darstellen, wie Seifen; Fettsulfatester, z.B. Dodecylnatriumsulfat, Octadecylnatriumsulfat und Cetylnatriumsulfat; Alkylsulfonate, Arylsulfonate und fettaromatische Sulfonate, wie Alkylbenzolsulfonate, z.B. Calcium-dodecylbenzol-sulfonat, und Butylnaphthalinsulfonate; und komplexere Fettsulfonate, z.B. die Amidkondensationsprodukte von Oelsäure und N-Methyltaurin und das Natriumsulfonat von Dioctylsuccinat.

Die Tenside können schliesslich kationische Verbindungen sein, wie Alkyldimethylbenzylammoniumchloride, Dialkyldimethylammoniumchloride, Alkyltrimethylammonium-

chloride und äthoxylierte quaternäre Ammoniumchloride.

Als Dispergatoren (ohne Tensidwirkung) kommen im wesentlichen in Frage: Lignin, Natrium- und Ammoniumsalze von Ligninsulfonsäuren, Natriumsalze von Maleinsäureanhydrid-Diisobutylen-Copolymeren, Natrium- und Ammoniumsalze von sulfonierten Polykondensationsprodukten aus Naphthalin und Formaldehyd, und Sulfitablaugen.

Als Dispergatoren, die sich insbesondere als Verdickungs- bzw. Antiabsetzmittel eignen, können z.B. Methylcellulose, Carboxymethylcellulose, Hydroxyäthylcellulose, Polyvinylalkohol, Alginate, Caseinate und Blutalbumin eingesetzt werden.

Beispiele von geeigneten Stabilisatoren sind säurebindende Mittel, z.B. Epichlorhydrin, Phenylglycidäther und Soyaepoxide; Antioxidantien, z.B. Gallussäureester und Butylhydroxytoluol; UV-Absorber, z.B. substituierte Benzophenone, Diphenylacrylonitrilsäureester und Zimtsäureester; und Deaktivatoren, z.B. Salze der Aethylendiaminotetraessigsäure und Polyglykole.

Die erfindungsgemässen Unkrautbekämpfungsmittel können zusätzlich zu den Verbindungen der Formel I Synergisten und andere Wirkstoffe, z.B. Insektizide, Akarizide, Bakterizide, anderweitige Herbizide, Fungizide, Pflanzenwachstumsregulatoren und Düngemittel, enthalten. Solche Kombinationsmittel eignen sich zur Verstärkung der Aktivität bzw. zur Verbreiterung des Wirkungsspektrums.

Die erfindungsgemässen Unkrautbekämpfungsmittel enthalten im allgemeinen zwischen 0,005 und 95 Gewichtsprozent, vorzugsweise zwischen 5 und 80 Gewichtsprozent,einer bzw. mehrerer Verbindungen der Formel I als Wirkstoff(e). Sie können z.B. in einer Form vorliegen, die sich für die Lagerung und den Transport eignet. In solchen Formulierungen, z.B. emulgierbaren Konzentraten, ist die Wirkstoffkonzentration normalerweise im höheren Bereich, vorzugsweise zwischen 10 und 80 Gewichtsprozent, insbesondere zwischen 25 und 75 Gewichtsprozent. Diese Formulierungen können dann, z.B. mit gleichen oder verschiedenen inerten Stoffen, bis zu Wirkstoffkonzentrationen verdünnt werden, die sich für den praktischen Gebrauch eignen, also vorzugsweise ca. 0,005 bis 2 Gewichtsprozent, insbesondere ca. 0,05 bis 1 Gewichtsprozent. Die Wirkstoffkonzentrationen können jedoch auch kleiner oder grösser sein.

Wie oben erwähnt, kann die Herstellung der erfindungsgemässen Unkrautbekämpfungsmittel in an sich bekannter Weise durchgeführt werden.

Zur Herstellung pulverförmiger Präparate kann der Wirkstoff, d.h. mindestens eine Verbindung der Formel I, mit festem Trägerstoff vermischt werden, z.B. durch Zusammenmahlen; oder man kann den festen Trägerstoff mit einer Lösung oder Suspension des Wirkstoffes imprägnieren und dann das Lösungs- bzw. Dispersionsmittel durch Abdunsten, Erhitzen oder Absaugen unter vermindertem Druck entfernen. Durch Zusatz von Tensiden bzw. Dispergatoren kann man solche pulverförmige Mittel mit Wasser leicht benetzbar machen, so dass sie in wässrige Suspensionen, die sich z.B. als Spritzmittel eignen, übergeführt werden können.

Die Verbindung der Formel I kann auch mit einem Tensid und einem festen Trägerstoff zur Bildung eines netzbaren Pulvers vermischt werden, welches in Wasser dispergierbar ist, oder sie kann mit einem festen vorgranulierten Trägerstoff zur Bildung eines granulatförmigen Produktes vermischt werden.

Wenn gewünscht, kann die Verbindung der Formel I in einem mit Wasser nicht mischbaren Lösungsmittel, wie beispielsweise einem hochsiedenden Kohlenwasserstoff, gelöst werden, das zweckmässigerweise gelöste Emulgiermittel enthält, so dass die Lösung bei Zugabe zu Wasser selbstemulgierend wirkt. Andernfalls kann der Wirkstoff mit einem Emulgiermittel vermischt und das Gemisch dann mit Wasser auf die gewünschte Konzentration verdünnt werden. Zudem kann der Wirkstoff in einem Lösungsmittel gelöst und danach mit einem Emulgiermittel gemischt werden. Ein solches Gemisch kann ebenfalls mit Wasser auf die gewünschte Konzentration verdünnt werden. Auf diese Weise erhält man emulgierbare Konzentrate bzw. gebrauchsfertige Emulsionen.

Die Verwendung der erfindungsgemässen Unkrautbekämpfungsmittel kann nach üblichen Applikationsmethoden, wie Spritzen, Sprühen, Stäuben, Giessen oder Streuen, erfolgen. Das erfindungsgemässe Verfahren zur Bekämpfung von Unkräutern ist dadurch gekennzeichnet, dass man das gegen Unkräuter zu schützende Gut und/oder die Unkräuter mit einer erfindungsgemässen Verbindung bzw. einem erfindungsgemässen Unkrautbekämpfungsmittel behandelt.

Die nachfolgenden Beispiele dienen zur näheren Erläuterung der Erfindung.

## I. Herstellung der Wirkstoffe der Formel I:

### Beispiel 1

3,1 g 5-(o-Chlor-p-trifluormethyl-phenoxy)-2-nitro-benzoesäure werden in 50 ml Toluol gelöst. Zur Lösung gibt man anschliessend 1,53 g 1,8-Diaza-bicyclo[5,4,0]undec-7-en und 2,11 g Aceton-O-(2-brompropionyl)oxim. Danach erhitzt man das Reaktionsgemisch während 18 Stunden bei Rückflusstemperatur.

Man lässt das Gemisch auf Raumtemperatur kühlen, versetzt es mit 100 ml Diäthyläther, wäscht die organische Phase mit 2N Salzsäure und Wasser, trocknet die Phase über wasserfreiem Natriumsulfat und engt sie ein. Der Rückstand wird an Kieselgel mit n-Hexan/Diäthyläther (4:1) chromatographisch gereinigt.

Man erhält den 5-(o-Chlor-p-trifluormethyl-phenoxy)-2-nitro-benzoesäure-(1-isopropylidenaminooxycarbonyl-äthyl)-ester; $n_D^{20}$ 1,5387.

In analoger Weise erhält man ausgehend von

5-(o-Chlor-p-trifluormethyl-phenoxy)-2-nitro-benzoesäure und 2-Methyl-3-butanon-O-(2-brompropionyl)oxim den 5-(o-Chlor-p-trifluormethyl-phenoxy)-2-nitro-benzoesäure-[1-(1,2-dimethylpropylidenaminooxycarbonyl)-äthyl]ester; $n_D^{20}$ 1,5122.

5-(o-Chlor-p-trifluormethyl-phenoxy)-2-nitro-benzoesäure und 2,2-Dimethyl-3-butanon-O-(2-brompropionyl)oxim den 5-(o-Chlor-p-trifluormethyl-phenoxy)-2-nitro-benzoesäure-[1-(1,2,2-trimethylpropylidenaminooxycarbonyl)-äthyl]ester; $n_D^{20}$ 1,4960.

5-(o-Chlor-p-trifluormethyl-phenoxy)-2-nitro-benzoesäure und 3-Hexanon-O-(2-brompropionyl)oxim den 5-(o-Chlor-p-trifluormethyl-phenoxy)-2-nitro-benzoesäure-[1-(1-äthylbutylidenaminooxycarbonyl)-äthyl]ester; $n_D^{20}$ 1,5032.

5-(o-Chlor-p-trifluormethyl-phenoxy)-2-nitro-benzoesäure und Aethylacetat-O-(2-brompropionyl)oxim den 5-(o-Chlor-p-trifluormethyl-phenoxy)-2-nitro-benzoesäure-[1-(1-äthoxyäthylidenaminooxycarbonyl)-äthyl]ester; Smp. 107-108°C.

Beispiel 2

2,7 g 5-(o-Chlor-p-trifluormethyl-phenoxy)-2-nitrobenzoesäureamid und 0,36 g Natriumhydrid (50% in Oel) werden in 30 ml Dimethylformamid vorgelegt und das Gemisch wird 1 Stunde nachgerührt. Anschliessend wird bei 25°C eine Lösung von 1,56 g Aceton-O-(2-brompropionyl)oxim in 5 ml Dimethylformamid zugetropft. Das Reaktionsgemisch wird 2 Stunden bei 25°C gerührt. Man gibt zum Gemisch 200 ml Diäthyläther, wäscht die organische Phase neutral mit Wasser, trocknet sie über wasserfreiem Natriumsulfat und engt sie ein.

Man erhält das 5-(o-Chlor-p-trifluormethyl-phenoxy)-2-nitro-N-(1-isopropylidenaminooxycarbonyl-äthyl)-benzoesäureamid; Massspektrum m/z: 56 (100%), 100 (23%), 207 (25%), 344 (52%), 346 (18%), 441 (43%) und 443 (15%).

Beispiel 3

Eine Lösung von 30,0 g 5-(o-Chlor-p-trifluormethyl-phenoxy)-2-nitro-benzoesäure in 41,3 g Thionylchlorid wird während 2,5 Stunden bei Rückflusstemperatur erhitzt. Nach Abdestillieren des überschüssigen Thionylchlorids und Trocknen am Hochvakuum erhält man 31,8 g 5-(o-Chlor-p-trifluormethyl-phenoxy)-2-nitro-benzoesäurechlorid, das für die Endstufe des Herstellungsverfahrens (folgend) benötigt wird.

6 g des obigen Benzoesäurechlorids werden in 40 ml Methylenchlorid gelöst, und die Lösung wird zu einer eiskalten Lösung von 2 g 2-Isopropylidenaminooxy-äthanol in

10 ml Methylenchlorid und 1,4 g Pyridin zugetropft. Man lässt das Reaktionsgemisch 2 Stunden bei Raumtemperatur nachreagieren. Zur Aufarbeitung engt man die Reaktionslösung unter vermindertem Druck ein, nimmt den Rückstand in Diäthyläther auf, wäscht die Aetherlösung mit Wasser, trocknet sie über wasserfreiem Natriumsulfat und dampft sie unter vermindertem Druck ein. Schliesslich wird der ölige Rückstand durch Kieselgel filtriert und aus n-Hexan kristallisiert. Man erhält den 5-(o-Chlor-p-trifluormethyl-phenoxy)-2-nitro-benzoesäure-(2-isopropylidenaminooxy-äthyl)ester; Smp. 53-54°C.

In analoger Weise erhält man ausgehend von

5-(o-Chlor-p-trifluormethyl-phenoxy)-2-nitro-benzoesäurechlorid und 2-(1-Methylpropylidenaminooxy)-äthanol den 5-(o-Chlor-p-trifluormethyl-phenoxy)-2-nitro-benzoesäure-[2-(1-methylpropylidenaminooxy)-äthyl]ester; $^{1}H$-NMR($CDCl_3$): 8,2-6,9 (m, 6H), 4,7-4,2 (m, 4H), 2,4-2,0 (m, 2H), 1,8 (s, 3H) und 1,3-0,9 (t, 3H).

5-(o-Chlor-p-trifluormethyl-phenoxy)-2-nitro-benzoesäurechlorid und 1-(isopropylidenaminooxy)-2-propanol den 5-(o-Chlor-p-trifluormethyl-phenoxy)-2-nitro-benzoesäure-(2-isopropylidenaminooxy-1-methyl-äthyl)ester; $^{1}H$-NMR ($CDCl_3$): 8,04 (d, 1H), 7,82 (d, 1H), 7,61 (q, 1H), 7,24 (d, 1H), 7,14 (d, 1H), 7,04 (q, 1H), 5,43 (m, 1H), 4,11 (d, 2H), 1,85 (s, 3H), 1,81 (s, 3H) und 1,37 (d, 3H).

5-(o-Chlor-p-trifluormethyl-phenoxy)-2-nitro-benzoesäurechlorid und 2-Cyclohexylidenaminooxy-äthanol den 5-(o-Chlor-p-trifluormethyl-phenoxy)-2-nitro-benzoesäure-(2-cyclohexylidenaminooxy-äthyl)ester; Smp. 92-94°C.

5-(o-Chlor-p-trifluormethyl-phenoxy)-2-chlor-benzoesäurechlorid und 2-Isopropylidenaminooxy-äthanol den 5-(o-Chlor-p-trifluormethyl-phenoxy)-2-chlor-benzoesäure-(2-isopropylidenaminooxy-äthyl)ester; $n_D^{20}$ 1,5347.

Mikroanalyse:

| | C% | H% | N% | Cl% |
|---|---|---|---|---|
| Ber. | 50,69 | 3,58 | 3,11 | 15,75 |
| Gef. | 50,72 | 3,58 | 3,11 | 15,61 |

5-(o-Chlor-p-trifluormethyl-phenoxy)-2-jod-benzoesäurechlorid und 2-Isopropylidenaminooxy-äthanol den 5-(o-Chlor-p-trifluormethyl-phenoxy)-2-jod-benzoesäure-(2-isopropylidenaminooxy-äthyl)ester; Smp. 60-62°C.

Beispiel 4

Zu einer auf -40°C abgekühlten Lösung von 5,85 g 2-Isopropylidenaminooxy-äthanol und 10,75 g 2-Brompropionsäurebromid in 100 ml Methylenchlorid wird unter Rühren eine Lösung von 3,95 g Pyridin in 50 ml Methylenchlorid zugetropft. Das Reaktionsgemisch wird während 1 Stunde bei Raumtemperatur gerührt und anschliessend unter vermindertem Druck zur Trockene eingedampft. Danach wird der Rückstand in n-Hexan gelöst, das verbleibende Salz (Pyridin-Hydrobromid) abgenutscht und das Filtrat zur Trockene eingedampft. Man erhält den 2-Brompropionsäure-(2-isopropylidenaminooxy-äthyl)ester, $n_D^{20}$ 1,4710, der für die Endstufe des Herstellungsverfahrens (folgend) benötigt wird.

Eine Lösung von 7,22 g 5-(o-Chlor-p-trifluormethyl-phenoxy)-2-nitro-benzoesäure, 5,04 g 2-Brompropionsäure-(2-isopropylidenaminooxy-äthyl)ester und 3,04 g 1,8-Diazabicyclo[5,4,0]undec-7-en in 60 ml Toluol wird während 60 Stunden bei Raumtemperatur gerührt. Danach wird das Reaktionsgemisch unter vermindertem Druck zur Trockene eingedampft, der Rückstand in n-Hexan gelöst und die Lösung mit Wasser gewaschen, über wasserfreiem Natriumsulfat getrocknet und unter vermindertem Druck zur Trockene eingedampft. Der dickflüssige Rückstand wird an Kieselgel mit n-Hexan/Diäthyläther (5:1) chromatographisch gereinigt. Man erhält den 5-(o-Chlor-p-trifluormethyl-phenoxy)-2-nitro-benzoesäure-{1-[(2-isopropylidenaminooxy-äthoxy)car-

bonyl]äthyl}ester; $^1$H-NMR ($CDCl_3$): 8,06 (d, 1H), 7,82 (d, 1H), 7,62 (q, 1H), 7,32 (d, 1H), 7,26 (d, 1H), 7,08 (q, 1H), 5,40 (q, 1H), 4,40 (m, 2H), 4,21 (t, 2H), 1,85 (s, 3H), 1,82 (s, 3H), und 1,60 (d, 3H).

In analoger Weise erhält man ausgehend von

5-(o-Chlor-p-trifluormethyl-phenoxy)-2-nitro-benzoesäure und 2-Brompropionsäure-[2-(1-methylpropylidenamino-oxy)-äthyl)ester (aus 2-(1-Methylpropylidenaminooxy)-äthanol und 2-Brompropionsäurebromid) den 5-(o-Chlor-p-trifluormethyl-phenoxy)-2-nitro-benzoesäure-{1-/[2-(1-methylpropylidenaminooxy)-äthoxy]carbonyl/äthyl}ester; $^1$H-NMR ($CDCl_3$): 8,06 (d, 1H), 7,81 (d, 1H), 7,62 (dd, 1H), 7,31 (d, 1H), 7,25 (d, 1H), 7,04 (dd, 1H), 5,4 (q, 1H), 4,48-4,32 (m, 2H), 4,23-4,18 (m, 2H), 2,35-2,13 (m, 2H), 1,83 und 1,80 (je s, 3H), 1,59 (d, 3H) und 1,1-1,0 (tt, 3H).

II. Formulierungsbeispiele:

## Beispiel 5

Zur Herstellung eines emulgierbaren Konzentrates (1,2,3,4,5 oder 6) werden die nachstehend aufgeführten Bestandteile miteinander vermischt:

Emulgierbares Konzentrat 1

| | |
|---|---|
| Wirkstoff der Formel I | 250 g |
| N-Methyl-2-pyrrolidon | 300 g |
| Emulgator A[1] | 100 g |
| Emulgator B[2] | 25 g |
| Lösungsmittelgemisch aus Alkylbenzolen | auf 1000 ml |

[1]Emulgator bestehend aus 60 Teilen eines Aethylenoxid-Propylenoxid-Blockpolymerisates, 20 Teilen Dodecylbenzolsulfonsäure-Calciumsalz und 20 Teilen Isobutanol/$C_{10}$-Alkylbenzole-Gemisch.

[2]Emulgator bestehend aus 70 Teilen Dodecylbenzolsulfonsäure-Calciumsalz und 30 Teilen Isobutanol/$C_{10}$-Alkylbenzole-Gemisch.

Emulgierbares Konzentrat 2

| | | |
|---|---|---|
| Wirkstoff der Formel I | | 250 g |
| Dimethylformamid | | 300 g |
| Fettalkohol-(10)-äthoxylat | | 75 g |
| Dodecylbenzolsulfonsäure-Calciumsalz | | 25 g |
| Lösungsmittelgemisch aus Alkylbenzolen | auf | 1000 ml |

Emulgierbares Konzentrat 3

| | | |
|---|---|---|
| Wirkstoff der Formel I | | 500 g |
| Ricinusöl-(30)-äthoxylat | | 50 g |
| Dodecylbenzolsulfonsäure-Calciumsalz | | 25 g |
| Cyclohexanon | auf | 1000 ml |

Emulgierbares Konzentrat 4

| | | |
|---|---|---|
| Wirkstoff der Formel I | | 750 g |
| Alkylbenzol-(8)-äthoxylat | | 50 g |
| Alkylbenzolsulfonsäure-Ammoniumsalz | | 25 g |
| Lösungsmittelgemisch aus Xylolen | auf | 1000 ml |

Emulgierbares Konzentrat 5

| | | |
|---|---|---|
| Wirkstoff der Formel I | | 250 g |
| Ricinusöl-(20)-äthoxylat | | 50 g |
| Dodecylbenzolsulfonsäure-Calciumsalz | | 25 g |
| Lösungsmittelgemisch aus Alkylbenzolen | | 150 g |
| N-Methyl-2-pyrrolidon | auf | 1000 ml |

Emulgierbares Konzentrat 6

| | |
|---|---|
| Wirkstoff der Formel I | 250 g |
| Ricinusöl-(20)-äthoxylat | 50 g |
| Dodecylbenzolsulfonsäure-Calciumsalz | 25 g |
| Cyclohexanon | 200 g |
| Lösungsmittelgemisch aus Alkylbenzolen | auf 1000 ml |

Das so erhaltene Konzentrat (1,2,3,4,5 bzw. 6) emulgiert spontan in Wasser, und die sich ergebende Emulsion eignet sich als gebrauchsfertige Spritzbrühe.

Beispiel 6

Zur Herstellung eines Spritzpulvers (1 oder 2) werden die nachstehend aufgeführten Bestandteile miteinander vermischt und hierauf feingemahlen:

Spritzpulver 1

| | Gewichtsprozent |
|---|---|
| Wirkstoff der Formel I | 50 |
| Hydratisierte Kieselsäure | 5 |
| Natrium-laurylsulfat | 1 |
| Natrium-lignosulfonat | 2 |
| Kaolin | 42 |

Spritzpulver 2

| | Gewichtsprozent |
|---|---|
| Wirkstoff der Formel I | 25 |
| Hydratisierte Kieselsäure | 30 |
| Alkylphenol-(12)-äthoxylat | 4 |
| Polycarbonsäure-Natriumsalz | 4 |
| Kaolin | 37 |

Das so erhaltene Pulver (1 bzw. 2) kann mit Wasser benetzt werden. Die entstandene Suspension eignet sich als gebrauchsfertige Spritzbrühe.

Beispiel 7

Zur Herstellung eines Stäubemittels werden die nachstehend aufgeführten Bestandteile miteinander vermischt und hierauf feingemahlen:

| | Gewichtsprozent |
|---|---|
| Wirkstoff der Formel I | 10 |
| Hydratisierte Kieselsäure | 7,5 |
| Talcum | 82,5 |

Beispiel 8

Zur Herstellung eines Granulats werden die nachstehend aufgeführten Bestandteile miteinander vermischt:

| | Gewichtsprozent |
|---|---|
| Wirkstoff der Formel I | 5 |
| Dipropylenglykol | 5 |
| Bimssteingranulat | 90 |

## Patentansprüche

1. Verbindungen der allgemeinen Formel

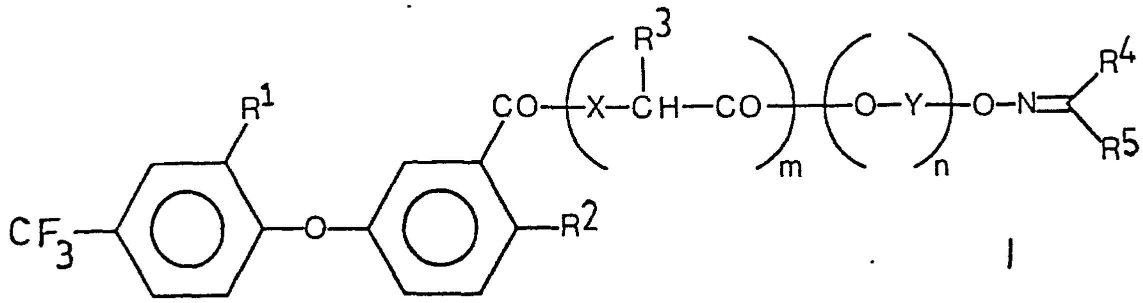

I

worin $R^1$ Wasserstoff oder Halogen,
$R^2$ Halogen, Nitro oder Cyano,
$R^3$ Wasserstoff oder Methyl,
$R^4$ $C_{1-6}$-Alkyl,
und $R^5$ $C_{1-6}$-Alkyl oder $C_{1-6}$-Alkoxy,
oder $R^4$ und $R^5$ zusammen mit dem Kohlenstoffatom, an das sie geknüpft sind, einen $C_{5-7}$-Cycloalkylring bilden,
m und n beide 1, oder das eine 0 und das andere 1,
X Sauerstoff oder $-NR^6-$,
Y nieder Alkylen mit mindestens 2 Kohlenstoffatomen
und $R^6$ Wasserstoff oder $C_{1-6}$-Alkyl bedeuten.

2. Verbindungen nach Anspruch 1, worin $R^1$ Chlor, $R^2$ Nitro, $R^3$ und $R^4$ je Methyl, $R^5$ $C_{1-3}$-Alkyl oder $C_{1-3}$-Alkoxy, eines von m und n 1 und das andere 0, X Sauerstoff und Y Aethylen bedeuten.

3. 5- (o-Chlor-p-trifluormethyl-phenoxy)-2-nitrobenzoesäure-(1-isopropylidenaminooxycarbonyl-äthyl)ester.

4. 5-(o-Chlor-p-trifluormethyl-phenoxy)-2-nitrobenzoesäure-[1-(1,2-dimethylpropylidenaminooxycarbonyl)-äthyl]ester.

5. 5-(o-Chlor-p-trifluormethyl-phenoxy)-2-nitro-benzoesäure-(2-isopropylidenaminooxy-äthyl)ester.

6. 5-(o-Chlor-p-trifluormethyl-phenoxy)-2-nitro-benzoesäure-[2-(1-methylpropylidenaminooxy)-äthyl]ester.

7. Eine Verbindung nach Anspruch 1, ausgewählt aus

5-(o-Chlor-p-trifluormethyl-phenoxy)-2-nitro-benzoesäure-[1-(1,2,2-trimethylpropylidenaminooxycarbonyl)-äthyl]ester,

5-(o-Chlor-p-trifluormethyl-phenoxy)-2-nitro-benzoesäure-[1-(1-äthylbutylidenaminooxycarbonyl)-äthyl]ester,

5-(o-Chlor-p-trifluormethyl-phenoxy)-2-nitro-benzoesäure-[1-(1-äthoxyäthylidenaminooxycarbonyl)-äthyl]ester,

5-(o-Chlor-p-trifluormethyl-phenoxy)-2-nitro-N-(1-isopropylidenaminooxycarbonyl-äthyl)-benzoesäureamid,

5-(o-Chlor-p-trifluormethyl-phenoxy)-2-nitro-benzoesäure-(2-isopropylidenaminooxy-1-methyl-äthyl)ester,

5-(o-Chlor-p-trifluormethyl-phenoxy)-2-nitro-benzoesäure-(2-cyclohexylidenaminooxy-äthyl)ester,

5-(o-Chlor-p-trifluormethyl-phenoxy)-2-nitro-benzoesäure-{1-[(2-isopropylidenaminooxy-äthoxy)carbonyl] äthyl}-ester und

5-(o-Chlor-p-trifluormethyl-phenoxy)-2-nitro-benzoesäure-{1-/[2-(1-methylpropylidenaminooxy)-äthoxy]carbonyl7-äthyl} ester.

8. Eine Verbindung nach Anspruch 1, ausgewählt aus

5-(o-Chlor-p-trifluormethyl-phenoxy)-2-chlor-benzoesäure-(2-isopropylidenaminooxy-äthyl)ester und

5-(o-Chlor-p-trifluormethyl-phenoxy)-2-jod-benzoesäure-(2-isopropylidenaminooxy-äthyl)ester.

9. Eine Verbindung nach Anspruch 1 als Unkrautbekämpfungsmittel.

10. Unkrautbekämpfungsmittel, dadurch gekennzeichnet, dass es eine wirksame Menge mindestens einer Verbindung der allgemeinen Formel

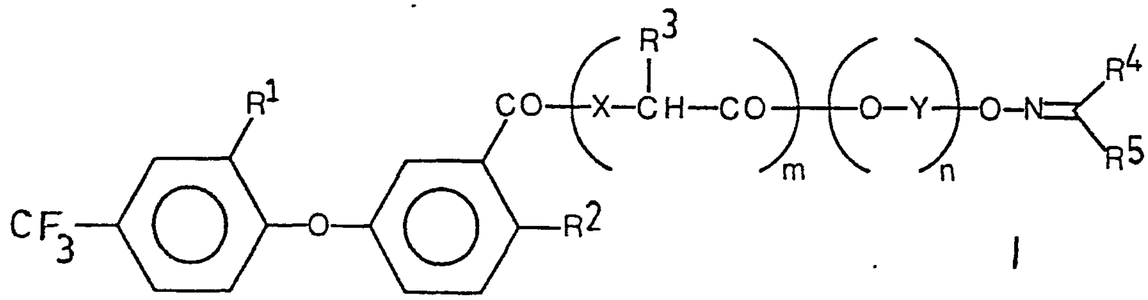

I

| | | |
|---|---|---|
| worin | $R^1$ | Wasserstoff oder Halogen, |
| | $R^2$ | Halogen, Nitro oder Cyano, |
| | $R^3$ | Wasserstoff oder Methyl, |
| | $R^4$ | $C_{1-6}$-Alkyl, |
| und | $R^5$ | $C_{1-6}$-Alkyl oder $C_{1-6}$-Alkoxy, |
| oder | $R^4$ | und $R^5$ zusammen mit dem Kohlenstoffatom, an das sie geknüpft sind, einen $C_{5-7}$-Cycloalkylring bilden, |
| | m | und n beide 1, oder das eine 0 und das andere 1, |
| | X | Sauerstoff oder $-NR^6-$, |
| | Y | nieder Alkylen mit mindestens 2 Kohlenstoffatomen |
| und | $R^6$ | Wasserstoff oder $C_{1-6}$-Alkyl bedeuten, |

sowie Formulierungshilfsstoffe enthält.

11. Unkrautbekämpfungsmittel nach Anspruch 10, dadurch gekennzeichnet, dass es eine wirksame Menge 5-(o-Chlor-p-trifluormethyl-phenoxy)-2-nitro-benzoesäure-(1-isopropylidenaminooxycarbonyl-äthyl)ester oder 5-(o-Chlor-p-trifluormethyl-phenoxy)-2-nitro-benzoesäure-[1-(1,2-dimethylpropylidenaminooxycarbonyl)-äthyl]ester oder 5-(o-Chlor-p-trifluormethyl-phenoxy)-2-nitro-benzoesäure-(2-isopropylidenaminooxy-äthyl)ester oder 5-(o-Chlor-p-trifluormethyl-phenoxy)-2-nitro-benzoesäure-[2-(1-methylpropylidenamino-

oxy)-äthyl]ester sowie Formulierungshilfsstoffe enthält.

12. Verfahren zur Herstellung von Verbindungen der allgemeinen Formel

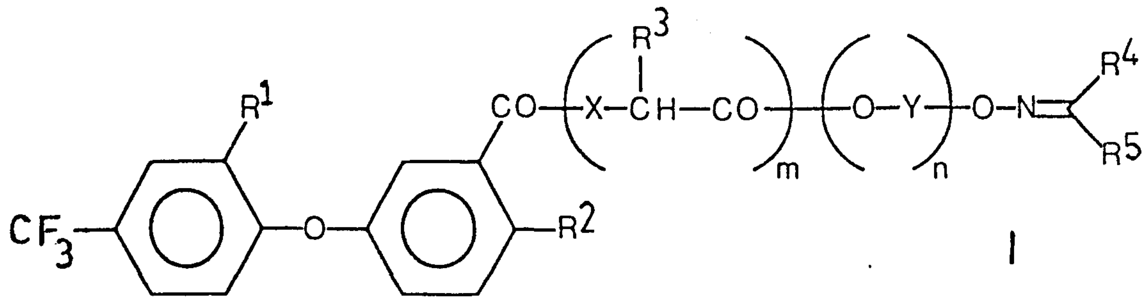

I

worin $R^1$ Wasserstoff oder Halogen,
$R^2$ Halogen, Nitro oder Cyano,
$R^3$ Wasserstoff oder Methyl,
$R^4$ $C_{1-6}$-Alkyl,
und $R^5$ $C_{1-6}$-Alkyl oder $C_{1-6}$-Alkoxy,
oder $R^4$ und $R^5$ zusammen mit dem Kohlenstoffatom, an das sie geknüpft sind, einen $C_{5-7}$-Cycloalkylring bilden,
m und n beide 1, oder das eine 0 und das andere 1,
X Sauerstoff oder $-NR^6-$,
Y nieder Alkylen mit mindestens 2 Kohlenstoffatomen
und $R^6$ Wasserstoff oder $C_{1-6}$-Alkyl bedeuten,
dadurch gekennzeichnet, dass man

a) eine Säure der allgemeinen Formel

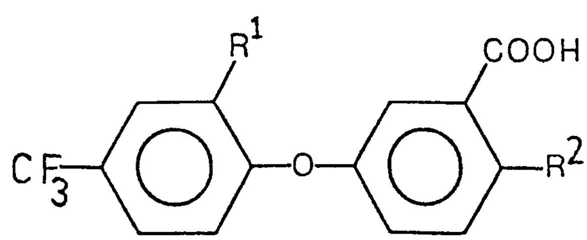

II

worin $R^1$ und $R^2$ die oben angegebenen Bedeutungen besitzen,

oder ein Salz bzw. ein reaktionsfähiges Derivat davon, mit einer Verbindung der allgemeinen Formel

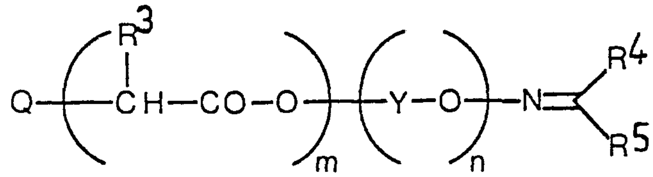

III

worin $R^3$, $R^4$, $R^5$, m, n und Y die oben angegebenen Bedeutungen besitzen

und Q eine Abgangsgruppe bzw. Hydroxy bedeutet,

umsetzt,

b) ein Säurehalogenid der allgemeinen Formel

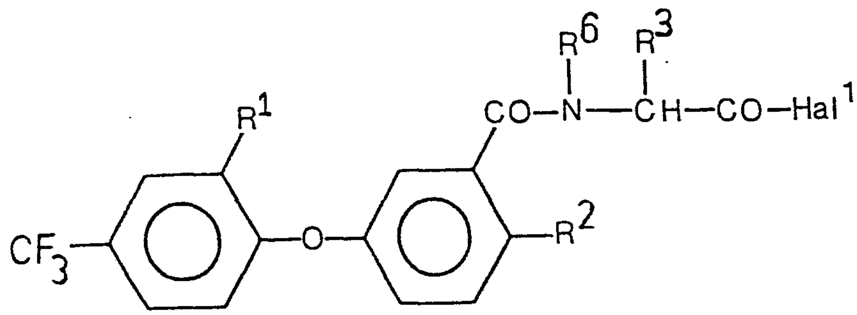

IV

worin $R^1$, $R^2$, $R^3$ und $R^6$ die oben angegebenen Bedeutungen besitzen

und $Hal^1$ Halogen bedeutet,

mit einem Alkohol bzw. Oxim der allgemeinen Formel

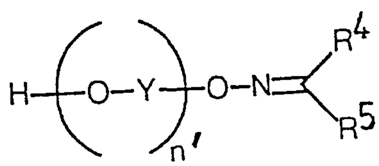

V

worin $R^4$, $R^5$ und Y die oben angegebenen Bedeutungen besitzen

und n' 0 oder 1 bedeutet,

umsetzt,

c) ein Benzamid der allgemeinen Formel

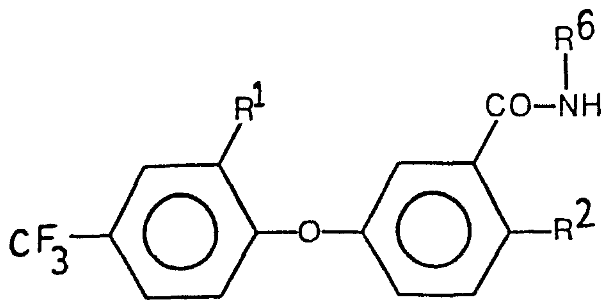

VI

worin $R^1$, $R^2$ und $R^6$ die oben angegebenen Bedeutungen besitzen,

mit einer Verbindung der allgemeinen Formel

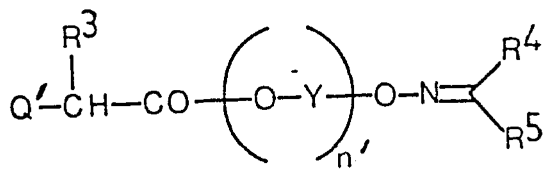

VII

worin $R^3$, $R^4$, $R^5$, Y und n' die oben angegebenen Bedeutungen besitzen,

und Q' eine Abgangsgruppe bedeutet,

umsetzt,

d) ein Phenol der allgemeinen Formel

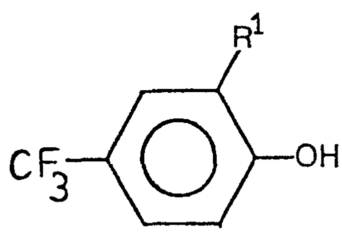

VIII

worin $R^1$ die oben angegebene Bedeutung besitzt,

oder ein Alkalimetallsalz davon, mit einem Halogenid der allgemeinen Formel

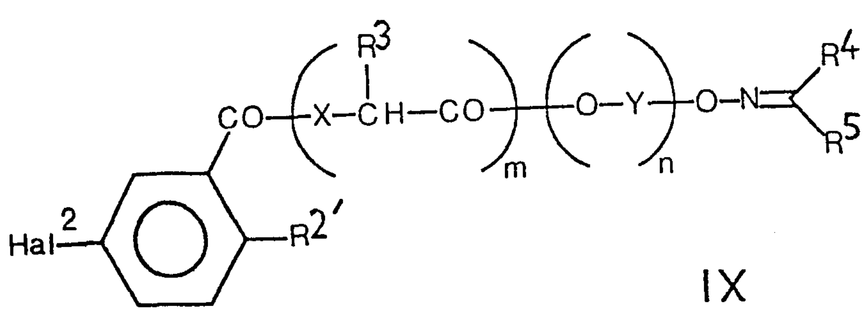

IX

worin $R^3$, $R^4$, $R^5$, m, n, X und Y die oben angegebenen Bedeutungen besitzen,
$R^{2'}$ Nitro oder Cyano bedeutet
und $Hal^2$ Halogen bedeutet,

umsetzt, oder

e) eine Verbindung der allgemeinen Formel

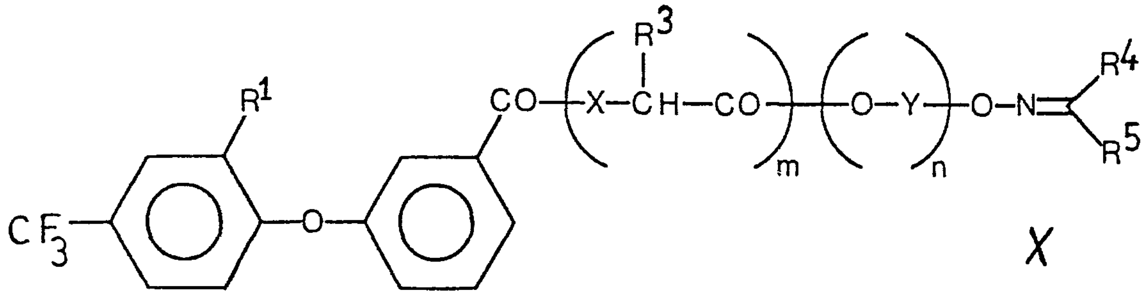

X

worin $R^1$, $R^3$, $R^4$, $R^5$, m, n, X und Y die oben angegebenen Bedeutungen besitzen,

nitriert.

13. Verfahren zur Bekämpfung von Unkräutern, dadurch gekennzeichnet, dass man das gegen Unkräuter zu schützende Gut und/oder die Unkräuter mit einer wirksamen Menge einer der in Anspruch 1 genannten Verbindungen bzw. eines in Anspruch 10 genannten Mittels behandelt.

14. Verwendung einer der in Anspruch 1 genannten Verbindungen bzw. eines in Anspruch 10 genannten Mittels zur Bekämpfung von Unkräutern.

***

## Patentansprüche für Oesterreich

1. Unkrautbekämpfungsmittel, dadurch gekennzeichnet, dass es eine wirksame Menge mindestens einer Verbindung der allgemeinen Formel

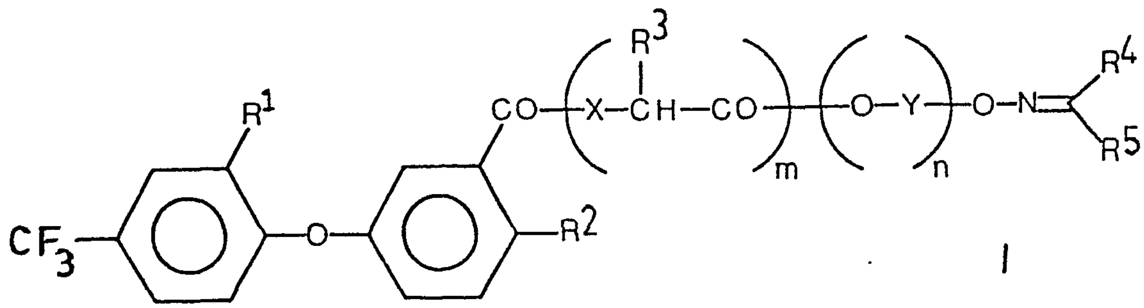

I

worin $R^1$ Wasserstoff oder Halogen,
$R^2$ Halogen, Nitro oder Cyano,
$R^3$ Wasserstoff oder Methyl,
$R^4$ $C_{1-6}$-Alkyl,
und $R^5$ $C_{1-6}$-Alkyl oder $C_{1-6}$-Alkoxy,
oder $R^4$ und $R^5$ zusammen mit dem Kohlenstoffatom, an das sie geknüpft sind, einen $C_{5-7}$-Cycloalkylring bilden,
m und n beide 1, oder das eine 0 und das andere 1,
X Sauerstoff oder $-NR^6-$,
Y nieder Alkylen mit mindestens 2 Kohlenstoffatomen
und $R^6$ Wasserstoff oder $C_{1-6}$-Alkyl bedeuten,

sowie Formulierungshilfsstoffe enthält.

2. Unkrautbekämpfungsmittel nach Anspruch 1, worin $R^1$ Chlor, $R^2$ Nitro, $R^3$ und $R^4$ je Methyl, $R^5$ $C_{1-3}$-Alkyl oder $C_{1-3}$-Alkoxy, eines von m und n 1 und das andere 0, X Sauerstoff und Y Aethylen bedeuten.

3. Unkrautbekämpfungsmittel nach Anspruch 1, dadurch gekennzeichnet, dass es eine wirksame Menge 5-(o-Chlor-p-trifluormethyl-phenoxy)-2-nitro-benzoesäure-(1-isopropylidenaminooxycarbonyl-äthyl)ester sowie Formulierungshilfs-

stoffe enthält.

4. Unkrautbekämpfungsmittel nach Anspruch 1, dadurch gekennzeichnet, dass es eine wirksame Menge 5-(o-Chlor-p-trifluormethyl-phenoxy)-2-nitro-benzoesäure-[1-(1,2-dimethylpropylidenaminooxycarbonyl)-äthyl]ester sowie Formulierungshilfsstoffe enthält.

5. Unkrautbekämpfungsmittel nach Anspruch 1, dadurch gekennzeichnet, dass es eine wirksame Menge 5-(o-Chlor-p-trifluormethyl-phenoxy)-2-nitro-benzoesäure-(2-isopropylidenaminooxy-äthyl)ester sowie Formulierungshilfsstoffe enthält.

6. Unkrautbekämpfungsmittel nach Anspruch 1, dadurch gekennzeichnet dass es eine wirksame Menge 5-(o-Chlor-p-trifluormethyl-phenoxy)-2-nitro-benzoesäure-[2-(1-methylpropylidenaminooxy)-äthyl]ester sowie Formulierungshilfsstoffe enthält.

7. Unkrautbekämpfungsmittel nach Anspruch 1, dadurch gekennzeichnet, dass es eine wirksame Menge einer Verbindung ausgewählt aus

5-(o-Chlor-p-trifluormethyl-phenoxy)-2-nitro-benzoesäure-[1-(1,2,2-trimethylpropylidenaminooxycarbonyl)-äthyl]ester,

5-(o-Chlor-p-trifluormethyl-phenoxy)-2-nitro-benzoesäure-[1-(1-äthylbutylidenaminooxycarbonyl)-äthyl]ester,

5-(o-Chlor-p-trifluormethyl-phenoxy)-2-nitro-benzoesäure-[1-(1-äthoxyäthylidenaminooxycarbonyl)-äthyl]ester,

5-(o-Chlor-p-trifluormethyl-phenoxy)-2-nitro-N-(1-isopropylidenaminooxycarbonyl-äthyl)-benzoesäureamid,

5-(o-Chlor-p-trifluormethyl-phenoxy)-2-nitro-benzoesäure-(2-isopropylidenaminooxy-1-methyl-äthyl)ester,

5-(o-Chlor-p-trifluormethyl-phenoxy)-2-nitro-benzoesäure-(2-cyclohexylidenaminooxy-äthyl)ester,

5-(o-Chlor-p-trifluormethyl-phenoxy)-2-nitro-benzoesäure-{1-[(2-isopropylidenaminooxy-äthoxy)carbonyl] äthyl}-

ester und

5-(o-Chlor-p-trifluormethyl-phenoxy)-2-nitro-benzoesäure-{1-/[2-(1-methylpropylidenaminooxy)-äthoxy]carbonyl/-äthyl}ester sowie Formulierungshilfsstoffe enthält.

8. Unkrautbekämpfungsmittel nach Anspruch 1, dadurch gekennzeichnet, dass es eine wirksame Menge 5-(o-Chlor-p-trifluormethyl-phenoxy)-2-chlor-benzoesäure-(2-isopropylidenaminooxy-äthyl)ester oder 5-(o-Chlor-p-trifluormethyl-phenoxy)-2-jod-benzoesäure-(2-isopropylidenaminooxy-äthyl)-ester sowie Formulierungshilfsstoffe enthält.

9. Verfahren zur Herstellung von Verbindungen der allgemeinen Formel

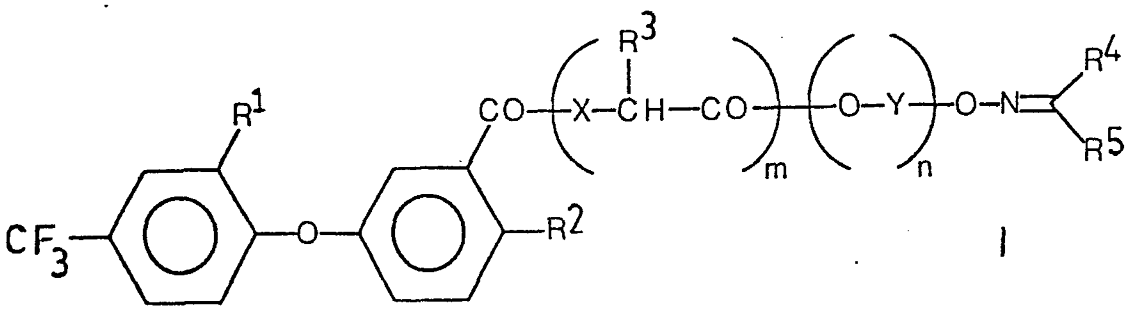

I

| | | |
|---|---|---|
| worin | $R^1$ | Wasserstoff oder Halogen, |
| | $R^2$ | Halogen, Nitro oder Cyano, |
| | $R^3$ | Wasserstoff oder Methyl, |
| | $R^4$ | $C_{1-6}$-Alkyl, |
| und | $R^5$ | $C_{1-6}$-Alkyl oder $C_{1-6}$-Alkoxy, |
| oder | $R^4$ | und $R^5$ zusammen mit dem Kohlenstoffatom, an das sie geknüpft sind, einen $C_{5-7}$-Cycloalkylring bilden, |
| | m | und n beide 1, oder das eine 0 und das andere 1, |
| | X | Sauerstoff oder $-NR^6-$, |
| | Y | nieder Alkylen mit mindestens 2 Kohlenstoffatomen |
| und | $R^6$ | Wasserstoff oder $C_{1-6}$-Alkyl bedeuten, |

dadurch gekennzeichnet, dass man

a) eine Säure der allgemeinen Formel

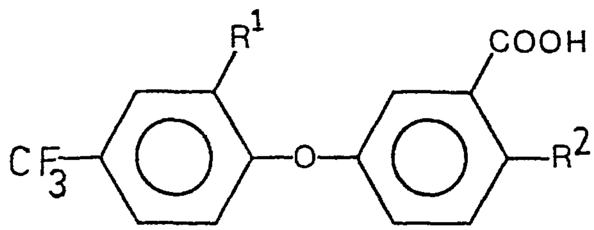

II

worin $R^1$ und $R^2$ die oben angegebenen Bedeutungen besitzen,

oder ein Salz bzw. ein reaktionsfähiges Derivat davon, mit einer Verbindung der allgemeinen Formel

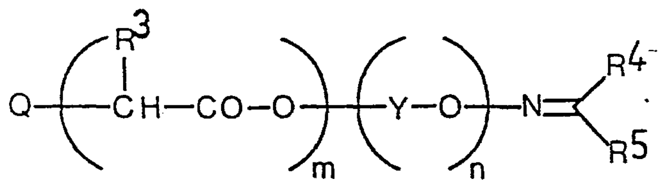

III

worin $R^3$, $R^4$, $R^5$, m, n und Y die oben angegebenen Bedeutungen besitzen

und Q eine Abgangsgruppe bzw. Hydroxy bedeutet,

umsetzt,

b) ein Säurehalogenid der allgemeinen Formel

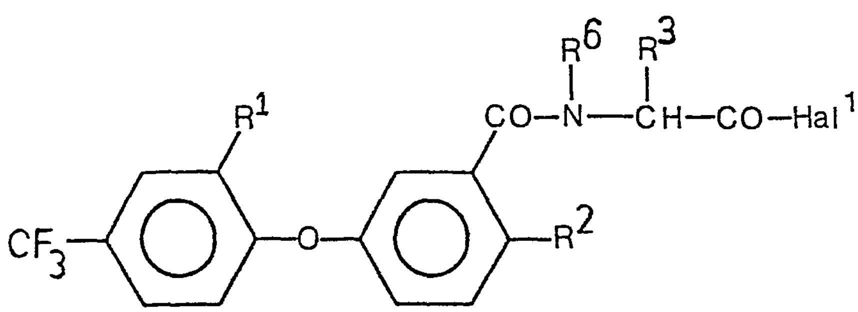

IV

worin $R^1$, $R^2$, $R^3$ und $R^6$ die oben angegebenen Bedeutungen besitzen

und $Hal^1$ Halogen bedeutet,

mit einem Alkohol bzw. Oxim der allgemeinen Formel

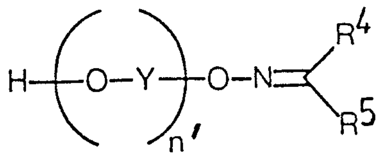

V

worin $R^4$, $R^5$ und Y die oben angegebenen Bedeutungen besitzen

und n' 0 oder 1 bedeutet,

umsetzt,

c) ein Benzamid der allgemeinen Formel

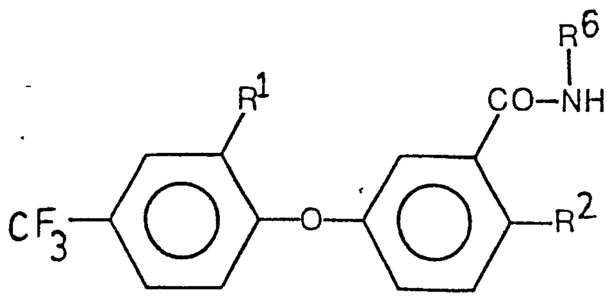

VI

worin $R^1$, $R^2$ und $R^6$ die oben angegebenen Bedeutungen besitzen,

mit einer Verbindung der allgemeinen Formel

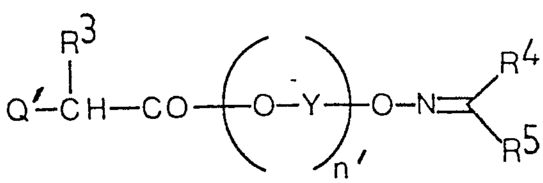

VII

worin $R^3$, $R^4$, $R^5$, Y und n' die oben angegebenen Bedeutungen besitzen,

und Q' eine Abgangsgruppe bedeutet,

umsetzt,

d) ein Phenol der allgemeinen Formel

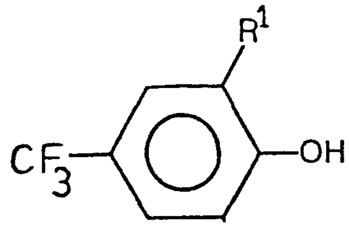

VIII

worin $R^1$ die oben angegebene Bedeutung besitzt, oder ein Alkalimetallsalz davon, mit einem Halogenid der allgemeinen Formel

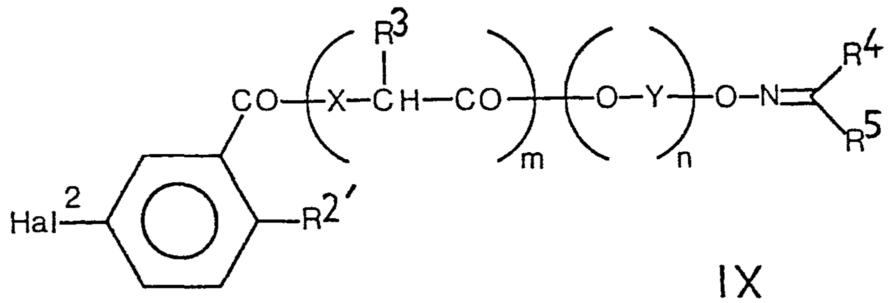

IX

worin $R^3$, $R^4$, $R^5$, m, n, X und Y die oben angegebenen Bedeutungen besitzen,
$R^{2'}$ Nitro oder Cyano bedeutet
und $Hal^2$ Halogen bedeutet,
umsetzt, oder

e) eine Verbindung der allgemeinen Formel

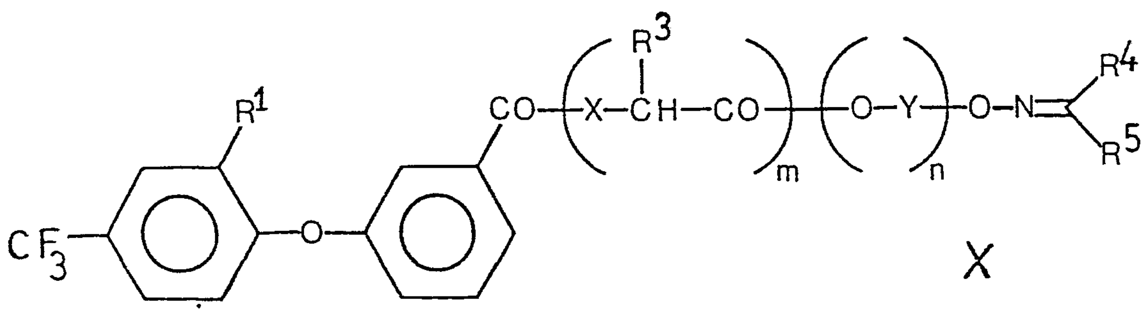

X

worin $R^1$, $R^3$, $R^4$, $R^5$, m, n, X und Y die oben angegebenen Bedeutungen besitzen,
nitriert.

10. Verfahren zur Herstellung eines Unkrautbekämpfungsmittels, dadurch gekennzeichnet, dass man mindestens eine der in Anspruch 1 genannten Verbindungen mit Formulierungshilfsstoffen vermischt.

11. Verfahren zur Bekämpfung von Unkräutern, dadurch gekennzeichnet, dass man das gegen Unkräuter zu schützende Gut und/oder die Unkräuter mit einer wirksamen Menge einer der in Anspruch 1 genannten Verbindungen bzw. eines in Anspruch 1 genannten Mittels behandelt.

12. Verwendung einer der in Anspruch 1 genannten Verbindungen bzw. eines in Anspruch 1 genannten Mittels zur Bekämpfung von Unkräutern.

***

0105527

Europäisches Patentamt

# EUROPÄISCHER RECHERCHENBERICHT

Nummer der Anmeldung

EP 83109975.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. [3]) |
|---|---|---|---|
| A | DE - A1 - 3 045 805 (BASF)<br>* Patentansprüche 2,3,9-12 *<br>-- | 1,9-14 | C 07 C 131/00<br>A 01 N 37/48<br>A 01 N 37/18<br>A 01 N 37/40 |
| A | EP - A2 - 0 034 012 (MOBIL OIL CORPORATION)<br>* Patentansprüche 1,9,10 *<br>-- | 1,9,10, 13,14 | |
| A | DE - A1 - 3 017 795 (PPG INDUSTRIES)<br>* Patentansprüche 1,17 *<br>-- | 1,9,10, 13,14 | |
| A | EP - A1 - 0 030 702 (F. HOFFMANN - LA ROCHE & CO.)<br>* Patentansprüche 1,16 *<br>---- | 1,9,10 | |
| | | | RECHERCHIERTE SACHGEBIETE (Int. Cl. [3]) |
| | | | C 07 C 131/00 |

Der vorliegende Recherchenbericht wurde für alle Patentansprüche erstellt.

| Recherchenort | Abschlußdatum der Recherche | Prüfer |
|---|---|---|
| WIEN | 21-12-1983 | REIF |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument